# EUROPÄISCHE PATENTANMELDUNG

(11) **EP 1 298 011 A2**
(43) Veröffentlichungstag der Anmeldung: **02.04.2003**
(21) Anmeldenummer: 02020127.3
(22) Anmeldetag: 07.09.2002
(51) Int. Cl.: B60R 21/01

(54) **Verfahren zur Notbetätigung bewegbarer Flächen an Fahrzeugen**

(30) Priorität: 29.09.2001 DE 10148340
(71) Anmelder: ROBERT BOSCH GMBH, 70442 Stuttgart (DE)
(72) Erfinder: Haderer, Guenter, 77815 Buehl (DE); Rychlak, Stefan, 31241 Ilsede (DE)

(57) **Zusammenfassung**

Die Erfindung bezieht sich auf ein Verfahren zur Betätigung bewegter, einen Innenraum (2) eines Fahrzeugs (1) begrenzender Flächen (22, 24, 28) bei Auftreten eines Unfallereignisses. Das Fahrzeug (1) ist mit Insassenschutzsystemen (14, 16, 17, 18; 20) zur Verbesserung der passiven Sicherheit der Fahrzeuginsassen ausgerüstet, welche über ein zentrales Steuergerät (10) ausgelöst werden. Dem Steuergerät (10, 10') werden Eingangssignale äußerer Einflüsse detektierender Sensoren (11, 12) und Eingangssignale von Sensoren (8, 19, 53) zugeführt, die im Innenraum (2) des Fahrzeugs (1) angeordnet sind. Bei Auftreten eines Unfallereignisses werden abhängig von dessen aus Eingangssignalen der Sensoren (8, 11, 12, 19, 53) in einer Auswerteroutine (42) ermittelten Schweregrades, den Innenraum (2) begrenzende Flächen (22, 24, 28) in ihre Offenstellung bewegt.

## Beschreibung

### Technisches Gebiet

An Kraftfahrzeugen werden heute zur Betätigung von Fensterscheiben oder Türen sowie Schiebe-/Hubdächern zunehmend elektrische Stellantriebe eingesetzt. Die elektrischen Stellantriebe werden über das Bordnetz des Fahrzeuges versorgt und werden von den Insassen individuell betätigt. Im Falle eines Unfalls stellen zum Beispiel die Fensterscheiben einerseits einen - allerdings begrenzten - Schutz für die Fahrzeuginsassen dar, da Gegenstände nicht in den Innenraum eindringen und nicht aus diesem hinausgelangen können. Andererseits können im Falle eines Unfalles geschlossen verbleibende Fensterscheiben das Entkommen der Insassen aus einem verunglückten Fahrzeug erschweren und Hilfe von außen verhindern. Das Einschlagen zum Beispiel von hochgefahrenen, nicht geborstenen Fensterscheiben nach einem Unfall kann eine zusätzliche Verletzungsgefahr durch splitternde Scheiben bergen.

### Stand der Technik

EP 0 759 496 B1 hat einen elektrischen Fensterheber zum Gegenstand. Gemäß dieser Lösung ist der elektrische Fensterheber mit einem mit einer Energiequelle verbundenen Antriebsmotor ausgestattet. Dessen Abtriebswelle ist mit einer Führung gekoppelt, in welcher das Fenster gelagert ist. Zwischen der Abtriebswelle und der Führung ist eine mechanische, von Hand oder Fuß ausrückbare Kupplung vorgesehen. Mit der Abtriebswelle ist ferner eine Seiltrommel gekoppelt, auf welcher ein um die Führung geführtes Seil teilweise aufgewickelt ist. Die um eine drehbar gelagerte Welle frei drehbare Seiltrommel ist von einer Kupplungsfeder in Kupplungseingriff mit der Abtriebswelle, gegebenenfalls über Zwischenschaltung eines Getriebes gedrängt. Auf der drehfest mit der Abtriebswelle gekoppelten Welle sitzt eine Kupplungsscheibe, die mit der Welle drehfest, jedoch axial auf ihr verschiebbar und von der Kupplungsfeder beaufschlagt ist. Die Kupplung ist über einen mit der Kupplungsscheibe in Eingriff stehenden, hand- oder fußbetätigbaren Hebel ausrückbar.

Bei Verschiebung der Kupplungsscheibe gegen die Kupplungsfeder öffnet sich im Notfall das geschlossene Fenster aufgrund seines Eigengewichtes, wobei die Öffnungsbewegung des geschlossenen Fensters von den Insassen des Fahrzeuges durch vertikalen Druck auf das Fenster beschleunigt werden kann. Damit kann jeder Insasse durch ein geöffnetes Seitenfenster aus dem Fahrzeug entkommen.

Bei heutigen Systemen zur Erhöhung der passiven Sicherheit der Insassen eines Kraftfahrzeuges wird über eine Vielzahl von Sensoren die jeweilige Fahrsituation des Kraftfahrzeuges überwacht. Im Falle eines Unfalls kann über ein im Kraftfahrzeug vorgesehenes zentrales Steuergerät unmittelbar die Kraftstoffzufuhr zur Verbrennungskraftmaschine unterbrochen werden, d.h. die Kraftstoffförderpumpe wird ausgeschaltet. Ferner lässt sich über das Steuergerät automatisch die Warnblinkanlage einschalten, wobei bei mit Navigationssystemen ausgerüsteten Kraftfahrzeugen ein Senden der Unfallposition des Kraftfahrzeugs möglich ist. Im Falle eines Unfalles wird, abhängig von der Schwere des Unfalls, d.h. den auftretenden Beschleunigungen über das zentrale Steuergerät außerdem die Auslösung eines Fahrer- bzw. Beifahrer-Airbags sowie gegebenenfalls vorhandener Seiten-Airbags ausgelöst. Moderne Steuergeräte in Kraftfahrzeugen können Sensoren umfassen, die auftretende Relativgeschwindigkeiten bzw. Beschleunigungswerte aufnehmen, aus denen zunächst die Schwere und Art des aufgetretenen Unfalls ermittelt wird, bevor geeignete Ansteuersignale zur Auslösung von Sicherheitssystemen wie zum Beispiel des Airbags aktiviert werden. Die eigentliche Aktivierung von Airbags bzw. Seiten-Airbags erfolgt dann durch der Bewertungsroutine nachgeschaltete Sensoren des zentralen Steuergerätes.

Im Zuge der Verbesserung der passiven Sicherheit von Fahrzeuginsassen werden zunehmend intelligente Gurtstraffersysteme gefordert, welche im Falle eines Unfalles die Spannung des die Insassen sichernden Sicherheitsgurtes erhöhen und anschließend eine Entspannung, d.h. eine Relaxation des Sicherheitsgurtes auslösen, um das Verletzungsrisiko der Fahrzeuginsassen weiter abzusenken.

### Darstellung der Erfindung

Die mit erfindungsgemäß vorgeschlagenen Lösung erzielbaren Vorteile sind vor allem darin zu erblicken, dass in Kraftfahrzeugen, die heute zum überwiegenden Teil standardmäßig mit Airbag-Systemen zum Schutz der Fahrzeuginsassen ausgestattet werden, deren Sensorik hinsichtlich auftretender Beschleunigungskräfte und/oder Relativgeschwindigkeiten zur Ansteuerung von elektrischen Stellantrieben von bewegten Flächen bzw. Schiebedach/Hubdächern genutzt werden können. Das im Kraftfahrzeug vorgesehene Sensoriksystem, das mit einem zentralen Airbag-Steuergerät zusammenarbeitet, kann periphere Frontsensoren, sogenannte "Pre-Crash"-Sensoren, Abstandssensoren zur Hindemiserkennung und Feuchtesensoren zur Ermittlung des Wasserstandes im Fahrzeuginnenraum, sowie eine der eigentlichen Auslösestufe vorgeschaltete Auswertungsroutine enthalten, in welcher die Schwere und Art des Unfalls analysiert wird und abhängig von der Schwere des Unfalls geeignete Auslösemaßnahmen eingeleitet werden. Dabei kann die Auswerteroutine auch verschiedene Kategorien von Unfällen, wie Frontal- und Seitenaufprall, Überschlag, Schleudern oder Sturz in Gewässer unterscheiden. Diese Sensoriksysteme lassen sich funktionell dergestalt erweitern, dass die gewonnenen Daten zur Fahrsituation eines Kraftfahrzeuges hinsichtlich des Auftretens unzulässig hoher Beschleunigungswerte mit den weiteren Sensorsignalen in der Auswerteroutine verarbeitet werde, wozu nur wenige Millisekunden erforderlich sind. Bei entsprechend ermittelten Schwere und Kategorie des Unfalls lassen sich die Dach- und Scheibenflächen innerhalb eines Zeitraumes zwischen 30 ms bis 100 ms - unter Umständen vor dem eigentlichen Aufprall - in ihre geöffnete Position bewegen. dadurch können Verletzungen durch Splitter der geborstenen Scheiben verhindert werden.

Alternativ zu einer Notöffnung durch ein zentrales Steuergerät, können die Flächen auch durch die Steuergeräte der einzelnen Stellantriebe in ihre Offenstellung bewegt werden. Dabei können die Sensoren zumindest teilweise in die Elektronik der Steuergeräte integriert werden. So kann beispielsweise ein Feuchtesensor dadurch realisiert werden, dass ein Teil der Leiterplatte des Steuergeräts nicht lackiert wird und somit beim Eintauchen ins Wasser ein Wasserstands-Signal auslöst.

Um die Zuverlässigkeit der Spannungsversorgung der Stellantriebe zu gewährleisten, können diese sowohl über das zentrale Bordnetz als auch über Notspannungsquellen verfügen, die bei unfallbedingtem Ausfall des Bordnetzes eines Kraftfahrzeuges die Stromversorgung der elektrischen Stellantriebe gewährleisten.

Eine andere Möglichkeit, den Zugang zum Innenraum oder das Entkommen aus diesem zu ermöglichen, liegt im Anordnen von Treibladungen zwischen Fensterrahmen und bewegter Fahrzeugfläche, sei es eine Fensterscheibe, sei es ein Hub-/Schiebedach. Dabei erleichtert ein Heraussprengen eines Kupplungselementes oder eines sonstigen, die Bewegung der bewegbaren Fläche herbeiführenden Bauteiles, die Bewegung der Fensterscheibe bzw. des Hub-/Schiebedaches sowohl von der Innen- als auch von der Außenseite des Fahrzeugs her. Als Treibladung lässt sich ein chemischer Feststoff einsetzen, der einerseits platzsparend untergebracht werden kann und andererseits eine kontrollierte Gasmenge bei seiner Aktivierung freisetzt. Zur Zündung der Treibladungen kann ein Zündbus eingesetzt werden, der auch das Auslösen von Gurtstraffern und der Airbags initiiert. Die Treibladung kann auch zwischen der bewegten Fläche und dem Antrieb angeordnet sein, so dass die Fensterscheibe innerhalb des den elektrischen Antrieb kapselnden Türhohlraumes von diesem getrennt wird und losgelöst von diesem - sei es von innen, sei es von außen - von Hand oder durch Zündung einer weiteren Treibladung bewegt werden kann.

Abhängig von der Schwere des aufgetretenen Unfallereignisses, ermittelt durch die Sensoriksysteme anhand der gemessenen Beschleunigungs- bzw. Relativgeschwindigkeitswerte, kann in der Auswerteroutine das Herunterfahren von Seitenscheiben in die Kfz-Türen - sei es durch den Stellantrieb, sei es durch Zündung einer Treibladung - so verzögert werden, dass die Seitenscheiben für eine kurze Zeitspanne von beispielsweise 10 bis 20 ms als Stütze für die Seiten-Airbags fungieren, so lange, bis diese sich vollständig entfaltet haben und einen wirksamen Schutz für die Insassen des Fahrzeuges darstellen. Bei einem festgestellten Sturz ins Wasser können die Flächen und die Gurtschlösser vorteilhaft auch erst nach einem Aufprall geöffnet werden, damit die Insassen das Fahrzeug auch unter Wasser einfach verlassen, beziehungsweise leicht geborgen werden können, da ein Öffnen der Türen gegen den Wasserdruck praktisch nicht möglich ist.

### Zeichnung

Anhand der Zeichnung wird die Erfindung nachstehend näher erläutert.

Es zeigt:
- Figur 1: die Sensorsysteme zur Auslösung von Gurtstraffern und Airbag-Systemen und Notöffnung bewegter Flächen innerhalb eines Fahrzeuges,
- Figur 2: eine Implementierungsmöglichkeit einer Aktivierung der Notfallbetätigung von bewegten Flächen im Kraftfahrzeug und
- Figur. 3: ein weiteres Ausführungsbeispiel einer Aktivierung der Notfallbetätigung von bewegten Flächen im Kraftfahrzeug.

### Ausführungsvarianten

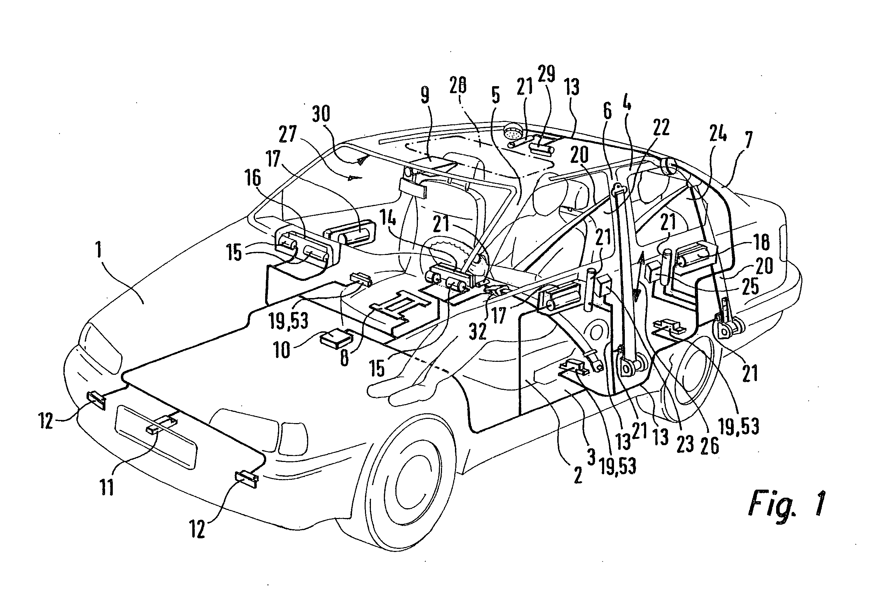

In Figur 1 sind die Sensorsysteme zur Auslösung von Gurtstraffern und Airbag-Systemen dargestellt, die im Innenraum eines Fahrzeuges angeordnet werden können.

Ein Innenraum 2 eines Fahrzeugs 1, insbesondere eines Kraftfahrzeugs, wird im wesentlichen durch die seitlichen Flächen zweier Vordertüren 3 sowie gegebenenfalls zweier Hintertüren 4 begrenzt; ferner wird der Innenraum 2 durch einen Dachhimmel 30 begrenzt, in welchen eine bewegliche Fläche in Gestalt eines kombinierten Hub-/Schiebedaches 28 eingelassen sein kann. Jede der Vordertüren 3 ist mit einer auf- und abbewegbaren Fensterscheibe 22 versehen, während jede der Hintertüren 4 eine ebenfalls auf und abbewegbare (vgl. Positionszeichen 26) Fensterscheibe 24 umfasst. Ferner wird der Innenraum 2 des Fahrzeugs durch eine Windschutzscheibe 27 sowie eine hier nicht dargestellte Heckscheibe begrenzt. Der Dachhimmel 30 wird im wesentlichen von zwei parallel zueinander aufgenommenen A-Säulen 5, zwei parallel zueinander angeordneten B-Säulen 6 sowie zwei C-Säulen 7 abgestützt, um dem Fahrgastraum des Fahrzeugs 1 eine ausreichende Steifigkeit zu verleihen. Im Dachhimmel 30 des Daches des Innenraumes 2 kann ein Ortungsmodul 9 integriert sein, welches in Zusammenarbeit mit einem Navigationssystem bei Auftreten eines Unfalles die exakte Fahrzeugposition senden kann. Ferner ist im Innenraum 2 des Fahrzeugs 1, bevorzugt im Bodenbereich, ein Gewichtssensor 8 aufgenommen, der das aktuelle Gewichts des Fahrzeugs 1 - einschließlich der Insassen - an ein zentrales Steuergerät 10 übermittelt.

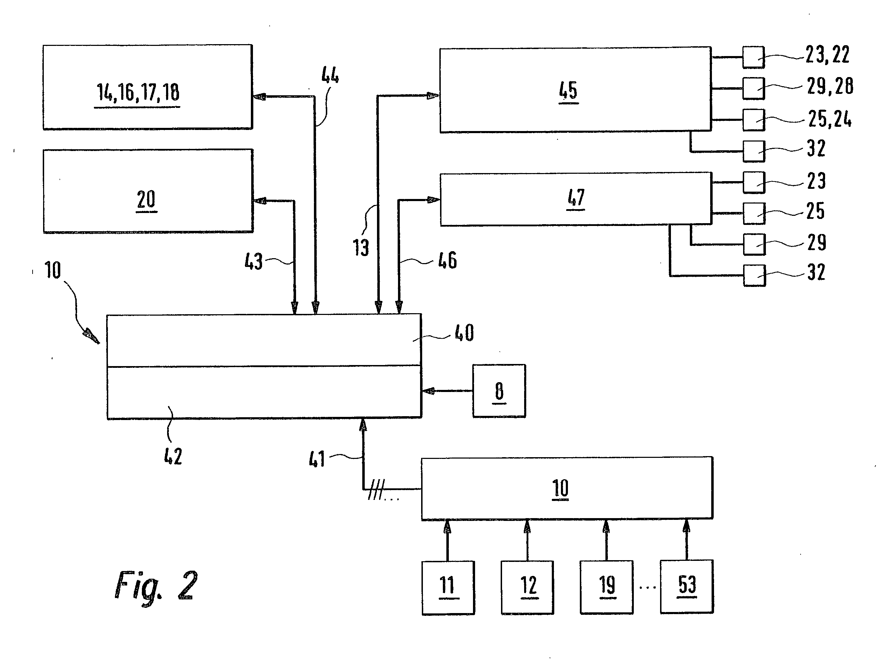

Das Fahrzeug gemäß der Darstellung in Figur 1 ist mit Insassenschutzsystemen zur Erhöhung der passiven Sicherheit der Fahrzeuginsassen ausgerüstet. Der Gewichtssensor 8 im Boden des Innenraumes 2 des Fahrzeugs 1 steht mit dem zentralen Airbag-Steuergerät 10 in Verbindung. Dazu dient ein Aktivierungsbus 13, der neben bidirektionalen Datenleitungen auch einen Ansteuerbus, d.h. einen Zündbus für Treibladungen enthalten kann. Im vorderen Bereich des Fahrzeugs 1 ist ein etwa mittig aufgenommener Frontsensor 11 aufgenommen, während im Bereich der vorderen Kotflügel auf jeder Seite des Fahrzeugs 1 voneinander beabstandete Pre-Crash-Sensoren 12 angeordnet sind. Der Frontsensor 11 sowie die Pre-Crash-Sensoren 12 stehen ebenfalls über den Aktivierungsbus 13 mit dem zentralen Steuergerät 10 sowie mit Gasgeneratoren 15 für Airbag-Systeme 14, 16, 17 und 18, welche ein erstes Insassenschutzsystem darstellen, in Verbindung. Daneben sind in die Systeme zur Erhöhung der passiven Sicherheit der Fahrzeuginsassen im Innenraum des Fahrzeuges 1 Beschleunigungs- 19 und Feuchtesensoren 53 eingelassen. Neben der Erfassung von hohen Beschleunigungswerten in Querrichtung wie in Längsrichtung, können mittels der Sensoren 8 und 19 auch Fahrzeugdrehungen und Drehratenänderungen des Fahrzeuges erfasst und ermittelt werden. Die von den Sensoren 8, 11, 12, 19, 53 ermittelten Signale werden zur Weiterverarbeitung an das zentrale Steuergerät 10 übermittelt. Das zentrale Steuergerät 10 kann einen Mikrocontroller 40 sowie eine diesem vorgeschaltete Auswerteroutine 42 umfassen (vgl. Darstellung gemäß Figur 2), wobei insbesondere in der Auswerteroutine 42 aus den von den Sensoren 8, 11, 12, 19 und 53 erfassten Eingangssignalen der Schweregrad und die Art eines aufgetretenen Unfallereignisses ermittelt wird.

Abhängig vom Schweregrad und Kategorie, der durch die von den Sensoren übermittelten Werte hinsichtlich auftretender Querbeschleunigungen oder Längsbeschleunigung oder Drehraten oder Gewicht oder Wasserstand im Innenraum (2) ermittelt wird, werden über das Bussystem (13, 43, 44, 46) die Insassenschutzsysteme ausgelöst.

Neben dem durch die Airbags 14, 16, 17 und 18 gebildeten ersten Insassenschutzsystem umfasst das Fahrzeug 1 ein zweites Insassenschutzsystem, welches durch eine Gurtstraffung von die Insassen sichernden Sicherheitsgurten 20 mit einem automatischen Gurtschloß 32 gegeben ist. Den Sicherheitsgurten 20, mit welchen die Insassen des Fahrzeuges 1 auf ihren Sitzen gesichert sind, sind im unteren Bereich des Fahrzeuginnenraumes mit dem Aktivierungsbus 13, der einen Zündbus umfassen kann, Treibladungen 21 eines chemischen Treibstoffes zugeordnet, der eine kontrollierte Gasmenge freisetzt. Bei Auftreten eines Unfallereignisses werden die Treibladungen 21, welche den Sicherheitsgurten 20 zugeordnet sind, über einen durch das zentrale Steuergerät 10 initiierten Impuls, abhängig von den Eingangssignalen der Sensoren 11, 12 gezündet, so dass ein kurzzeitiges Straffen der Sicherheitsgurte 20 erfolgt, dem sich nach einer vorgebbaren Zeitspanne eine Relaxation des Sicherheitsgurtes 20 anschließen kann, um das Verletzungsrisiko, insbesondere Knochenbrüche bei den Insassen des Fahrzeuges zu vermeiden.

Neben dem erwähnten, durch die Airbags 14, 16, 17 und 18 gebildeten ersten Insassenschutzsystem und dem durch die Straffung der Sicherheitsgurte 20 dargestellten zweiten Insassenschutzsystem kann in Bezug auf die den Innenraum 2 des Fahrzeugs 1 begrenzenden Flächen, d.h. die Fensterscheiben 22 bzw. 24 sowie ein gegebenenfalls im Dachhimmel 30 ausgebildetes Hub-/Schiebedach 28 ein drittes Insassenschutzsystem implementiert werden. Die bewegten Flächen 22, 24, 28 in Gestalt von Scheibenmaterial werden in der Regel über diesen zugeordnete Stellantriebe 23, 25, 29 betätigt. Diese Stellantriebe 23, 25, 29 werden in der Regel über das Bordnetz des Kraftfahrzeugs versorgt, sei es das herkömmliche 12V-Netz, sei es das zukünftige 42V-Netz. Neben der zentralen Spannungsversorgung über das Bordnetz können den einzelnen Stellantrieben 23, 25, 29 der bewegten Flächen 22, 24, 28 - ebenso wie den Gurtschlössern 32 - auch eigene Notspannungsquellen zugeordnet sein, um deren Redundanz zu erhöhen und sicherzustellen, dass bei Auftreten eines Unfallereignisses bei ausgefallenem Bordnetz ein Öffnen der bewegbaren Flächen 22, 24, 28 des Fahrzeugs 1 sichergestellt ist.

Mit den elektrischen Stellantrieben 23, 25, 28 lassen sich die Fensterscheiben 22, 24 in vertikale Richtung 26 auf und ab bewegen, während über den elektrischen Stellantrieb 29 dem Hub-/Schiebedach eine im wesentlichen horizontale Bewegung aufgeprägt werden kann.

Bei Auftreten eines Unfallereignisses können die Stellantriebe 23, 25, 29 je nach Schweregrad des aufgetretenen Unfallereignisses, abhängig von den durch die Sensorik 8, 11, 12, 19, 53 erfassten Daten, - unter Umständen auch zeitverzögert - in ihre Offenstellung gefahren werden. Die Fensterscheiben 22, 24 bzw. das Hub-/Schiebedach 28, welche den Innenraum 2 Fahrzeugs 1 begrenzen, fahren in ihre jeweilige Offenstellung, so dass sowohl ein Entkommen unverletzt gebliebener Fahrzeuginsassen aus dem Innenraum 2 des Fahrzeugs 1 möglich ist, als auch der Innenraum 2 des Fahrzeugs 1 von außen zugänglich wird. Insbesondere bei Fahrzeugen mit Hub-/Schiebedach 28 kann dadurch eine Zugänglichkeit zum Innenraum 2 in Gestalt einer große Öffnung geschaffen werden, die das Risiko von weiteren Verletzungen der Insassen eines verunglückten Fahrzeugs durch splitternde Glasscheiben zur Ermöglichung des Zugangs zum Innenraum, völlig ausschließt. Zusätzlich werden beim dritten Insassenschutzsystem nach einem Unfall die Gurtschlösser 32 beispielsweise elektromagnetisch geöffnet, so daß die Insassen nach einem Unfall das Fahrzeug, insbesondere auch unter Wasser, einfacher verlassen können. Dabei ist der Feuchtesensor 53 zur Detektion von eindringendem Wasser in die Leiterplatte eines das Gurtschloß 32 ansteuernen Steuergeräts 10' integriert oder alternativ als Schwimmer im Fußbereich des Innenraums 2 ausgeführt.

Das durch die Bewegung von bewegbaren Flächen 22, 24, 28 gegebene dritte Insassenschutzsystem kann auch durch vom zentralen Steuergerät 10 - abhängig vom Schweregrad und Kategorie des aufgetretenen Unfalles - über den Aktivierungsbus 13 ansteuerbare weitere Treibladungssätze 21 dargestellt werden. In diesem Falle sind Treibladungen 21 den Stellantrieben 23, 25, 29 für die bewegbaren Flächen 22, 24, 28, die den Innenraum 2 des Fahrzeugs 1 begrenzen, zugeordnet. Die in den Innenräumen von Vordertüren 3 bzw. Hintertüren 4 angeordneten elektrischen Stellantriebe 23, 25 übertragen ihre Stellbewegung über Zahnradelemente oder Bowden-Züge an die in vertikale Richtung 26 bewegbaren Fensterscheiben 22, 24 bzw. in horizontale Richtung im Falle des Hub-/Schiebedaches 28 und des dieses beaufschlagenden Antriebes 29. Sind den elektrischen Antrieben 23, 25, 29 Treibladungen 21 zugeordnet, kann eines der Übertragungselemente des Antriebes aus dem Antriebszug herausgesprengt werden, wodurch ein Blockieren der bewegbaren Flächen 22, 24, 28 aufgehoben wird und diese sowohl von innen als auch von außen leicht zu Öffnen sind, wobei es jedoch auch möglich ist, die Treibladungen 21 derart zwischen einer Halterung der Flächen 22, 24, 28 und deren Rahmen anzuordnen, dass durch deren Zündung mittels des Aktivierungsbusses 13 die bewegbaren Flächen 22, 24, 28 unmittelbar in ihre Offenstellung gefahren werden können.

In einer Variation des Ausführungsbeispiels wird zuerst eines der Übertragungselemente des Antriebes aus dem Antriebszug mit einer Treibladung 21 herausgesprengt und anschließend die bewegbaren Flächen 22, 24, 28 mittels einer weiteren Treibladung 21 unmittelbar in ihre Offenstellung bewegt. Als Treibladungssätze 21 lassen sich insbesondere kompaktbauende chemische Treibstoffe einsetzen, die ein kontrolliertes Gasvolumen freisetzen.

In einer weiteren Ausführungsvariante des dritten Insassenschutzsystems, welches durch die in ihre Öffnungsstellung bewegbaren Flächen 22, 24, 28 dargestellt wird, können die Treibladungssätze auch zwischen den Stellantrieben 23, 25, 29 und den bewegbaren Flächen 22, 24, 28 angeordnet sein und bei Aktivierung die Verbindung zwischen Stellantrieb 23, 25, 29 und den bewegbaren Flächen 22, 24, 28 komplett trennen. Im Falle der Vordertüren 3 bzw. der Hintertüren 4 können die Treibladungssätze 21 dazu in den Türhohlräumen, den Stellantrieben 23, 25 direkt zugeordnet sein.

Ebenso werden die Gurtschlösser 32 alternativ zur elektromagnetischen Betätigung mittels Treibladungen 21 aufgesprengt, die vom zentralen Steuergerät 10 über entsprechende Treibladungszünder 45 aktiviert werden.

Figur 2 zeigt eine Implementierungsmöglichkeit einer Aktivierung der Notfallbetätigung von bewegten Flächen in Kraftfahrzeugen.

Aus der Darstellung gemäß Figur 2 geht hervor, dass das zentrale Steuergerät 10 zur Auslösung von die passive Sicherheit von Fahrzeuginsassen verbessernden Insassenschutzsystemen mit Eingangssignalen von Sensoren 8, 11, 12, 19, 53 um nur einige zu nennen, beaufschlagt wird. Die Anordnung der Sensoren 8, 11, 12, 19, 53 kann der Darstellung in Figur 1 entnommen werden. Die dem zentralen Airbag-Steuergerät 10 zugeführten Eingangssignale der Sensoren 11, 12, 19 und 53 können entweder als Eingangssignale 41 einer Auswerteroutine 42, welche einem Mikrocontroller 40 vorgeschaltet sind, zugeführt werden, wobei die Auswerteroutine 42 auch im zentralen Airbag-Steuersystem 10, ebenso wie der Mikroprozessor 40, integriert sein kann. In der Auswerteroutine 42 werden abhängig von den Eingangssignalen 41 der Sensorik 11, 12, 19, 53 die erfassten Verzögerungs- bzw. Beschleunigungsdaten sowie Informationen zum Fahrzeuggewicht, übermittelt durch den Gewichtssensor 8, verarbeitet. Abhängig von den Eingangsdaten des Gewichtssensors 8 bzw. der Eingangssignale 41 kann der Schweregrad und die Kategorie des aufgetretenen Unfallereignisses beurteilt werden und, abhängig vom Überschreiten bestimmter kritischer Werte lassen sich durch den Mikrocontroller 40 bzw. das zentrale Airbag-Steuergerät 10 die genannten Insassenschutzsysteme aktivieren. Die Aktivierung des ersten Insassenschutzsystems, des zweiten Insassenschutzsystems sowie des dritten Insassenschutzsystems kann entweder gleichzeitig oder abhängig von dem ermittelten Schweregrad des aufgetretenen Unfallereignisses in gestufter Abfolge erfolgen. So ist bei Zusammenstößen geringerer Geschwindigkeiten nicht immer die Auslösung des ersten Insassenschutzsystems in Gestalt der Airbags 14, 16, 17, 18 erforderlich. Es reicht die Aktivierung des zweiten Insassenschutzsystems 20 durch Aktivierung der Gurtstraffung über ein entsprechendes Auslösesignal 43 aus.

Abhängig von einer optional vorgesehenen Auswerteroutine 42 kann der Mikrocontroller 40 oder das zentrale Airbag-Steuergerät über ein entsprechendes Auslösesignal 43 das zweite Insassenschutzsystem 20 durch Straffung der Sicherheitsgurte aktivieren. Die Aktivierung der Airbags 14, 16, 17, 18 durch Ansteuersignale 44 durch den Mikrocontroller 40 kann auch unmittelbar über die Signale der im Frontbereich des Fahrzeugs angeordneten Sensoren 11, 12 erfolgen; daneben ist eine Ansteuerung des ersten Insassenschutzsystems in Gestalt der Airbags 14, 16, 17, 18 durch Ansteuersignale 44 möglich, die vom Mikrocontroller 40 generiert werden.

Der Mikrocontroller 40 vermag ebenfalls Ansteuersignale 46 zu generieren, die einer Ansteuerung 47 zugeführt werden können. Mittels der Ansteuerung 47 wird eine Aktivierung der Stellantriebe 23, 25, 29, die den entsprechenden bewegbaren Flächen 22, 24, 28, die den Innenraum 2 des Fahrzeugs 1 begrenzen, zugeordnet sind, und der Gurtschlösser 32 herbeigeführt. Die Stellantriebe 23, 25, 29 bewegen die bewegbaren Flächen in ihre Offenstellung, wobei sie entweder über das noch intakte Bordnetz mit Spannung versorgt werden oder - ebenso wie die Ansteuerung 47 der Gurtschlösser 32 - über redundante, den Stellantrieben 23, 25, 29 separat zugeordnete Notspannungsquellen versorgbar sind.

Alternativ zur Ansteuerung der elektrischen Antriebe 23, 25, 29 über Ansteuersignale 46 können Treibladungssätze 21 über einen Treibladungssatzzünder 45 gezündet werden, dessen Zündimpuls über den Aktivierungs- bzw. Zündbus 13 übermittelbar ist. Bei Aktivierung der Treibladungssätze 21 an den Stellantrieben 23, 25, 29 können einzelne Komponenten des Antriebsstranges zwischen der bewegbaren Fläche 22, 24, 28 und dem elektrischen Stellantrieb 23, 25, 29 herausgesprengt werden, so dass sich eine manuelle Bewegbarkeit der bewegten Flächen 22, 24, 28 durch Aufhebung der Selbsthemmung ergibt. Die Treibladungssätze 21 können im Innenraum von Vordertüren 3 bzw. Hintertüren 4 unterhalb der in vertikale Richtung 26 bewegbaren Flächen 22, 24, 28 aufgenommen sein, so dass neben dem Heraussprengen einzelner Übertragungskomponenten aus dem Antriebsstrang, auch eine komplette Trennung der bewegbaren Fläche 22, 24, 28 von dem sie beaufschlagenden elektrischen Stellantrieb 23, 25, 29 möglich ist. Dies gilt sowohl für die am Dachhimmel 30 bewegbare Fläche des Hub-/Schiebedaches 28, welches durch den elektrischen Antrieb 29 bewegt werden kann, als auch für die in den Hohlräumen der Vordertüren 3 bzw. Hintertüren 4 angeordneten elektrischen Stellantriebe 23, 25. Nach der Durchtrennung des Antriebstrangs der Stellantriebe 23, 25, 29 werden in einem zweiten Schritt die bewegbaren Flächen direkt durch weitere Treibladungen 21 in ihre Offen-Position bewegt.

Die Zeitverzögerung zwischen der ersten Zündung für den Antriebsstrang (bzw. Loslösen der Stellantriebe 23, 25, 29) und der zweiten Zündung zur Bewegung der Flächen 22, 24, 28 wird durch das Steuergerät (10) gesteuert. Die genannten Stellantriebe 23, 25, 29 und die Treibladungen 21 sind allesamt in den Aktivierungs- bzw. Zündbus 13 integriert und durch diesen aktivierbar. In gleicher Weise wie bei der Notöffnungsfunktion der Flächen 22, 24, 28, sind den Gurtschlössern 32 Treibladungen 21 zugeordnet, die durch den Treibladungszünder 45, der über den Zündbus 13 angesteuert wird, gezündet werden. Je nach Schwere und Kategorie des Unfalls werden die Gurtschlösser entweder über den Zündbus 13 aufgespengt oder über die Ansteuerung 47 automatisch, beispielsweise elektromagnetisch, geöffnet.

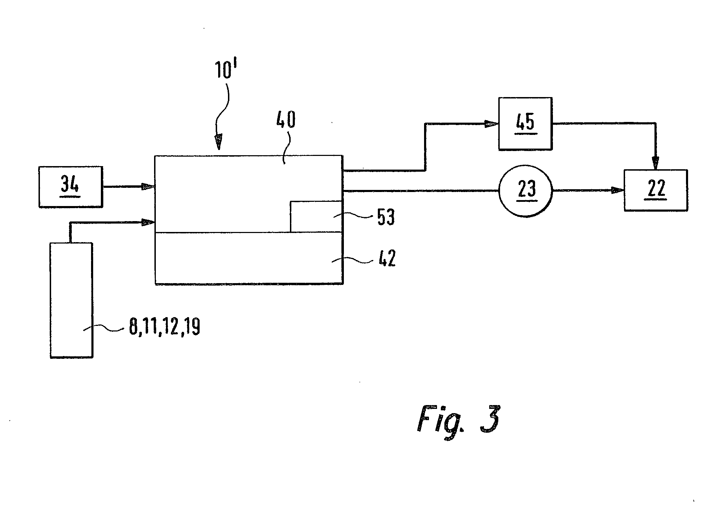

In einem weiteren Ausführungsbeispiel nach Figur 3 werden die Flächen 22, 24, 28 und Gurtschlösser 32 nicht durch ein zentrales Steuergerät 10 angesteuert, sondern jeder einzelnen bewegten Fläche 22, 24, 28 oder Gurtschloß 32 ist ein eigenes seperates Steuergerät 10' zugeordnet. Das Steuergerät 10' der Fensterscheibe 22 in Figur 3 bekommt einerseits Eingangssignale über eine Fensterbedieneinheit 34, andererseits Sensorsignale, 8, 11, 12, 19, 53, die das Auftreten eines Unfallereignisses detektieren. Dabei ist zumindest ein Teil der Sensoren in unmittelbarer Nähe zum Steuergerät 10' angeordnet, oder in dieses integriert. So ist beispielsweise der Feuchtesensor 53 als nicht lackierter Bereich auf einer Leiterplatte des Steuergeräts 10' ausgebildet. Die Auswertungsroutine 42 für die Kategorisierung eines Unfalles ist ebenfalls lokal in jedem einzelnen Steuergerät integriert. Zur Notöffnung der Scheibe 22 wird diese dann durch den Stellantrieb 23 oder alternativ über durch Treibladungszünder 45 aktivierte Treibladungen 21 geöffnet. Die Notöffnungsfunktionen der verschiedenen Flächen 22, 24, 28 und der Gurtschlösser 32 sind somit völlig unabhängig voneinander und können auch eine individuelle Sensorik aufweisen. Die Notöffnung der Gurtschlösser 32 nach einem Unfall kann beispielsweise auch ohne Notöffnung der bewegbaren Flächen 22, 24, 28 realisiert werden.

In speziellen Fällen kann es auch erwünscht sein die bewegbaren Flächen, insbesondere ein Schiebedach direkt vorm eintreten eines Unfallereignisses in sehr kurzer Zeit zu schließen, um beispielsweise das Herausschleudern von Insassen oder das Eindringen von Gegenständen zu verhindern, beziehungsweise die Stabilität des Fahrgastraums zu erhöhen. Hierzu kann die erfindungsgemäße Lösung zur Notöffnung von bewegbaren Flächen selbstverständlich auch zum schnellen Verschließen derselben beim Auftreten eines Unfallereignisses verwendet werden, wobei hierzu weitere Treibladungen 21 in der Weise angeordnet werden müssen, dass sich diebewegbaren Flächen beim Zünden in Schließrichtung bewegen.

### Bezugszeichenliste

- 1: Fahrzeug
- 2: Innenraum
- 3: Vordertür
- 4: Hintertür
- 5: A-Säule
- 6: B-Säule
- 7: C-Säule
- 8: Gewichtssensor
- 9: Ortungsmodul HOS
- 10: Airbag-Steuergerät
- 10': seperate Steuergeräte
- 11: Frontsensor
- 12: Pre-Crash-Sensor
- 13: Aktivierungs- und Zündbus
- 14: Fahrer-Airbag
- 15: Gasgenerator
- 16: Beifahrer-Airbag
- 17: Seiten-Airbag Vordertür
- 18: Seiten-Airbag Hintertür
- 19: Beschleunigungssensor
- 20: Sicherheitsgurt
- 21: Treibladung
- 22: Fensterscheibe Vordertür
- 23: Stellantrieb
- 24: Fensterscheibe Hintertür
- 25: Stellantrieb
- 26: Vertikalbewegung
- 27: Windschutzscheibe
- 28: Hub-/Schiebedach
- 29: Stellantrieb
- 30: Dachhimmel
- 32: Gurtschlösser
- 34: Bedieneinheit
- 40: µC
- 41: Eingangssignale Sensorik
- 42: Auswerteroutine
- 43: Auslösesignal Gurtstraffung
- 44: Auslösesignal Airbags
- 45: Treibladungszünder
- 46: Stellantrieb-Ansteuerung
- 47: Ansteuerung
- 53: Feuchtesensor

## Patentansprüche

1. Verfahren zur Betätigung mittels Stellantrieben (23, 25, 29) bewegter, einen Innenraum (2) eines Fahrzeugs (1) begrenzender Flächen (22, 24, 28) bei Auftreten eines Unfallereignisses, wobei das Fahrzeug (1) mit Insassenschutzsystemen (14, 16, 17, 18; 20) ausgerüstet ist, die mittels eines Bussystems (13, 43, 44, 46) über ein zentrales Steuergerät (10) auslösbar sind, das Eingangssignale äußerer und/oder innerer Einflüsse detektierender Sensoren (11, 12, 8, 19, 53) erhält, durch gekennzeichnet, dass in Abhängigkeit eines Unfallereignisses die den Innenraum (2) begrenzende Flächen (22, 24, 28) mittels des zentralen Steuergeräts (10) über das Bussystem (13, 43, 44, 46) in ihre Offenstellung bewegt werden.

2. Verfahren zur Betätigung, einen Innenraum (2) eines Fahrzeugs (1) begrenzender Flächen (22, 24, 28), die mittels Steuergeräte (10') aufweisende Stellantriebe (23, 25, 29) betätigt werden, wobei den Steuergeräten (10') Eingangssignale äußerer und/oder innerer Einflüsse detektierender Sensoren (11, 12, 8, 19, 53) zugeführt werden, wobei mittels der Sensoren das Auftreten eines Unfallereignisses detektierbar ist, **dadurch gekennzeichnet, dass** in Abhängigkeit eines Unfallereignisses über die Steuergeräte (10') die den Innenraum (2) begrenzende Flächen (22, 24, 28) in ihre Offenstellung bewegt werden.

3. Verfahren nach einem der Ansprüche 1 oder 2, **dadurch gekennzeichnet, dass** im Steuergerät (10, 10') in einer Auswerteroutine (42) bei Auftreten eines Unfallereignisses dessen Schweregrad und Kategorie anhand von Signalen der Sensorik (8, 11, 12; 19, 53) ermittelt wird und abhängig davon Auslösemaßnahmen der Insassenschutzsysteme (14, 16, 17, 18, 20) und/oder die Öffnung der den Innenraum (2) begrenzenden Flächen (22, 24, 28) aktiviert werden.

4. Verfahren gemäß Anspruch 3, **dadurch gekennzeichnet, dass** die Sensorik (8, 11, 12; 19, 53) Fahrzeugewicht und/oder Verzögerungsdaten und/oder Drehraten und/oder Abstände zu Hindernissen und/oder den Wasserstand im Innerenraum (2) erfaßt.

5. Verfahren gemäß Anspruch 3, **dadurch gekennzeichnet, dass** der Wasserstand im Innerenraum (2) mittels eines Sensors (53) mit Schwimmer im unteren Bereich des Fahrzeugs und/oder einer teilweise nicht lackierten Leiterplatte innerhalb eines Steuergeräts (10, 10') erfaßt wird.

6. Verfahren nach einem der Ansprüche 1 oder 2, **dadurch gekennzeichnet, dass** zumindest einer der Sensoren (8, 11, 12; 19, 53) im Innenraum (2) des Fahrzeugs (1) angeordnet ist.

7. Verfahren nach einem der Ansprüche 1 oder 2, **dadurch gekennzeichnet, dass** das Steuergerät (10, 10') die die bewegbaren Flächen (22, 24; 28) antreibende Stellantriebe (23, 25, 29) in Öffnungsrichtung ansteuert.

8. Verfahren nach einem der vorherigen Ansprüche, **dadurch gekennzeichnet, dass** das Steuergerät (10, 10') abhängig vom ermittelten Schweregrad und der Kategorie des Unfallereignisses Gasgeneratoren (15) eines ersten Insassenschutzsystems (14, 16, 17, 18) auslöst.

9. Verfahren nach einem der vorherigen Ansprüche, **dadurch gekennzeichnet, dass** das Steuergerät (10) Treibladungen (21) an einem zweiten Insassenschutzsystem (20) auslöst.

10. Verfahren nach einem der vorherigen Ansprüche, **dadurch gekennzeichnet, dass** ein Insassenschutzsystem Sicherheitsgurte (20) mit Gurtschlössern (32) aufweist, die in Abhängigkeit der Sensorsignale (8, 11, 12, 19, 53) automatisch geöffnet werden.

11. Verfahren nach einem der vorherigen Ansprüche, **dadurch gekennzeichnet, dass** die Auslösung der Insassenschutzsysteme (14, 16, 17, 18, 20) und/oder die Öffnung der die den Innenraum (2) begrenzende Flächen (22, 24, 28) und/oder das Öffnen der Gurtschlösser (32) nach der Detektion eines Unfallereignisses jeweils mit bestimmten Zeitverzögerungen aktiviert werden.

12. Verfahren nach einem der vorherigen Ansprüche, **dadurch gekennzeichnet, dass** das Steuergerät (10, 10') Treibladungen (21) zum Öffnen der den den Innenraum (2) des Fahrzeugs (1) begrenzenden Flächen (22, 24, 28) auslöst.

13. Verfahren nach einem der vorherigen Ansprüche, **dadurch gekennzeichnet, dass** das Steuergerät (10, 10') Treibladungen (21) zur Trennung der Stellantriebe (23, 25, 27) von den den Innenraum (2) des Fahrzeugs (1) begrenzenden Flächen (22, 24, 28) auslöst.

14. Verfahren nach einem der vorherigen Ansprüche, **dadurch gekennzeichnet, dass** das Steuergerät (10, 10') Treibladungen (21) innerhalb der Türen (3, 4) des Fahrzeugs (1) aktiviert und die Treibladungen (21) Komponenten des Antriebsstranges der Stellantriebe (23, 25, 29) aus diesen heraustrennen.

15. Verfahren nach einem der vorherigen Ansprüche, **dadurch gekennzeichnet, dass** das Steuergerät (10, 10') Treibladungen (21) zum Lösen der Gurtschlösser 32 der Sicherheitsgurte (20) auslöst.

16. Verfahren nach einem der vorherigen Ansprüche, **dadurch gekennzeichnet, dass** die Stellantriebe (23, 25, 29) der den Innenraum (2) begrenzenden Flächen (22, 24, 28) über das Bordnetz des Fahrzeugs (1) und zur Erhöhung der Redundanz von einer weiteren Spannungsquelle gespeist werden.

17. Verfahren nach einem der vorherigen Ansprüche, **dadurch gekennzeichnet, dass** als Treibladung (21) im Innenraum (2) und an den Türen (3, 4) des Fahrzeugs (1) ein chemischer Treibstoff eingesetzt wird, der eine kontrollierte Gasmenge freisetzt.
